# EUROPEAN PATENT SPECIFICATION

(11) **EP 3 768 596 B1**
(45) Date of publication and mention of the grant of the patent: **31.12.2025**
(21) Application number: 18713882.1
(22) Date of filing: 23.03.2018
(51) Int. Cl.: B64D 11/06

(54) **ASSEMBLY SET FOR A PASSENGER SEATING ARRANGEMENT, USING OF THE ASSEMBLY SET FOR A VEHICLE CABIN AND A PASSENGER SEATING ARRANGEMENT**
MONTAGESATZ FÜR EINE PASSAGIERSITZANORDNUNG, VERWENDUNG DES MONTAGESATZES FÜR EINE FAHRZEUGKABINE UND PASSAGIERSITZANORDNUNG
KIT DE MONTAGE POUR UN AGENCEMENT DE SIÈGES PASSAGERS, UTILISATION DU KIT DE MONTAGE POUR UNE CABINE DE VÉHICULE ET UN AGENCEMENT DE SIÈGES PASSAGERS

(43) Date of publication of application: 27.01.2021
(73) Proprietor: Elevate Aircraft Seating LLC, Bothell, WA 98011 (US)
(72) Inventor: HARCUP, Anthony, Virginia Water, Surrey GU25 4BY (GB); ALEXANDRINO, Edson Manuel Ribeiro, London SW14 7EB (GB); LENDON, Nicholas, Woking, Surrey GU21 3LB (GB); WILLIAMS, Andrew Stephen Fereday, London E5 9EN (GB)
(74) Representative: Arnold & Siedsma
(86) International application number: PCT/EP2018/057551
(87) International publication number: WO 2019/179637

(56) References cited:
- EP-A1- 3 078 594
- WO-A1-2014/155353
- US-A1- 2003 066 931
- US-A1- 2014 283 296
- US-A1- 2017 088 267
- US-A1- 2017 233 057
- US-A1- 2018 208 316
- US-A1- 2020 115 029
- US-B2- 10 577 074

## Description

The invention relates to an assembly set for seat units of a passenger seating arrangement. Further the invention relates to using of an assembly set for creating different passenger seating arrangements in a vehicle cabin and/or a passenger seating arrangement in a vehicle cabin.

Specific seating arrangements tend to be sold as specific set layouts, and are just cosmetically for different airlines. When a new cabin layout is introduced, this is typically either as revision of the previous layout or a brand new layout that has been started from scratch. For airlines, this tends to limit their choice from any one seat manufacturer. For seat manufacturers, there can be significant cost in needing to constantly develop brand new layouts.

Various passenger seating arrangements for vehicle cabins are disclosed in US 2017/233057 A1, WO 2014/155353 A1, US 2017/088267 A1 and US 2014/283296 A1, which discloses (in its wording) a set including two blocks each of two seats convertible for lying down, wherein the two blocks are arranged with the seats of one block face-to-face with the seats of the other block inside a circumscribed rectangle.

It is an object of the present invention to provide an assembly set for passenger seating arrangements within a vehicle cabin. It is a further object of the present invention to provide an improved, easy changeable passenger seating arrangement. The object is achieved by an assembly set according to claim 1, by a use of the assembly set according to claim 6, and by a passenger seating arrangement according to claim 7.

Preferred embodiments of the invention are given in the dependent claims.

According to the present invention of the assembly set, a high customization of any passenger seating arrangement within the vehicle cabin is ensured. The assembly set provides a variety of possible seat unit configurations. By putting different components of the assembly set together, different seat units can be achieved. In particular, by arranging different or identical seat units together, multiple seating layouts can be designed out of the components of the assembly set. Moreover, each seating layout as well as each seat unit can be changed individually within the same vehicle cabin. In particular, by providing essentially common outer dimensions for each seat unit, a change of the passenger seating arrangement can be simplified. Therefore, manufacturing costs as well as a revision time can be reduced. Moreover, a customer choice of specific cabin layouts is not limited.

The different seat units are formable by different combinations of one of the seat assemblies, one of the seat shell structures, one of the armrest structures, one of the privacy dividers, and one of the table structures, wherein the different seat units have a congruent ground plan or identical outer dimensions.

Each seat unit, in particular seat assembly, comprises at least one of a forward or rearward facing seat. At least a longitudinal axis of the seat is parallel and/or angled to a longitudinal axis of the vehicle cabin, e.g. an aircraft cabin.

An angled seat unit, e.g. inwardly or outwardly angled, comprises a seat whose longitudinal axis is angled relative to the longitudinal axis of the vehicle cabin, e.g. an aircraft cabin.

Particularly, a number of forward facing seat units and a number of angled seat units can be arranged in such a manner that at least a density of passenger seats within the vehicle cabin, hereafter termed as cabin, can be optimised whilst ensuring a high comfort space to each passenger.

Differerent seat shell structures, e.g. furniture parts, comprise a number of common basic equipment parts for each seat unit in particular to be provided in each of different seating layouts in the vehicle cabin. In other words: different seat units have some parts or components, such the basic equipment parts, in common. This enables a wide variety of different layouts to be created from a relatively small assembly set or catalogue of components.

According to further disclosure, the different seat shell structures, e.g. furniture parts, are optionally assembled with respect to each other such that at least seat unit dimensions of each seat unit remain substantially the same, in particular in each layout. This enables same passenger density (PAX density) independently from the shell design.

In an exemplary embodiment, a width of at least a rear shell wall of the seat shell structures in a transverse direction of the vehicle cabin and/or a height of at least the rear shell wall of the seat shell structures for each seat unit are identical. In particular the width and/or the height of at least one shell wall remain substantially the same in each layout independently from the seat shell structure used to be.

In another exemplary embodiment, the seat units of each layout provide common utility surface dimensions.

According to the disclosure, an assembly set is provided and used to create a number of different seat units and a number of different passenger seating layouts, in particular overall passenger seating layouts within a vehicle cabin. In particular, each passenger seating layout is configurable by assembling a number of common parts, e.g. seat shell structures, armrest structures, table structures, door structures, with respect to each other depending on an orientation of the seat within each seat unit, wherein the different seat units have a congruent ground plan or identical outer dimensions.

According to another disclosure, a passenger seating arrangement for a vehicle cabin, e.g. an aircraft cabin, comprises a plurality of seat units, wherein each of the seat units are created by components of at least one of a sub-set or plurality of seat assemblies, a sub-set or plurality of seat shell structures, a sub-set or plurality of armrest structures, a sub-set or plurality of door structures, a sub-set or plurality of privacy dividers, and a sub-set or plurality of table structures, wherein different seat units are formable by different combinations of one of the seat assemblies, one of the seat shell structures, one of the armrest structures, one of the privacy dividers, and one of the table structures, wherein the different seat units have a congruent ground plan or identical outer dimensions.

The seat units in one column are arranged one behind another in a longitudinal direction of the vehicle cabin.

In an exemplary embodiment, each seat unit provides a seat assembly with a seat being adjustable between at least a seating position and at least a bed position. In a further exemplary embodiment, each seat shell structure comprises a number of furniture parts at least partially surrounding the seat and providing a passenger access.

According to the disclosure a passenger seating arrangement comprises a seating layout forming by one of an in-line seating layout, an outwardly faced herringbone seating layout, an inwardly faced herringbone seating layout and a combination of different seating layouts for arranging the seat units in the vehicle cabin. Therefore, the different seat units are adaptable with respect to each other such that each of the seat units is positionable within each, particularly any of the seating layouts. In other words: A customization and interchangeability of the different seating layouts are substantially simplified, whereas the different seat units, particularly having congruent ground plan and outer dimensions, can be used in any of the seating layouts. In particular, the seat units are one of a forward or rearward facing seat unit, wherein at least a longitudinal axis of the seat of this seat unit is parallel to a longitudinal axis of the aircraft cabin, and an angled seat unit, wherein at least the longitudinal axis of the seat of this angled seat unit is angled relative to the longitudinal axis of the vehicle cabin.

According to another disclosure a vehicle cabin, e.g. an aircraft cabin, comprises a passenger seating arrangement as described before.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1: shows a schematic overview of an assembly set of common components for creating different seat units and variable passenger seating arrangements,
- Figures 2A to 2D: show in each case a schematic top view of different seat units,
- Figures 3A to 3E: show in each case a perspective view of different seat units,
- Figures 4 to 7: show in each case a top view of an embodiment of a passenger seating arrangement in a column,
- Figures 8 to 12: show in each case a top view of an embodiment of a passenger seating arrangement comprising pairs of seat units in two columns, and
- Figures 13 to 18: show in each case a top view of an embodiment of a passenger seating arrangement in a vehicle cabin.

Corresponding parts are marked with the same reference symbols in all figures.

### DETAILED DESCRIPTION OF PREFERRED EMBODIMENTS

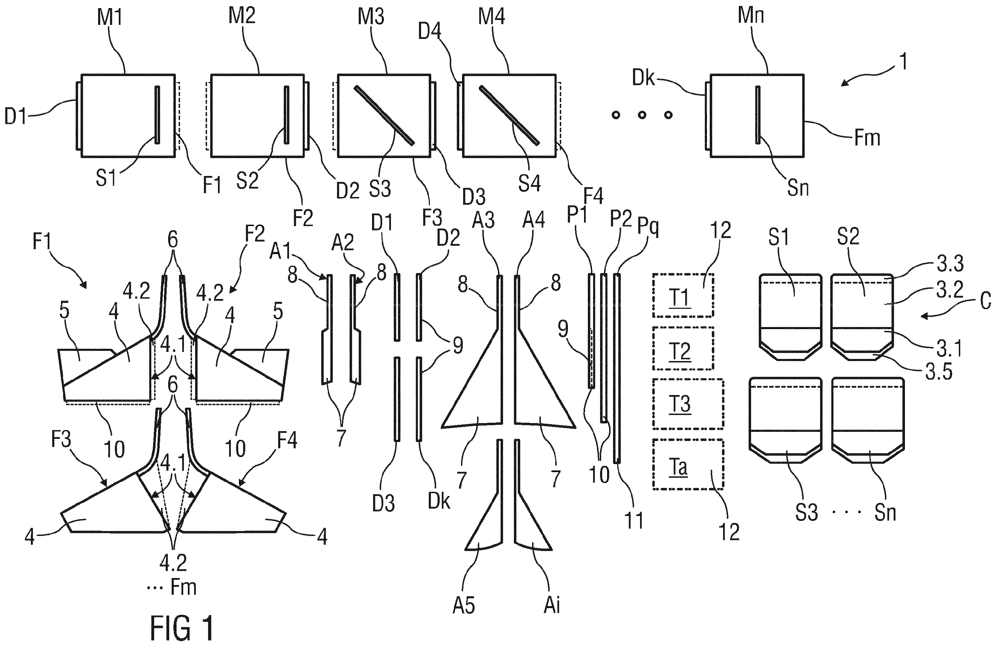

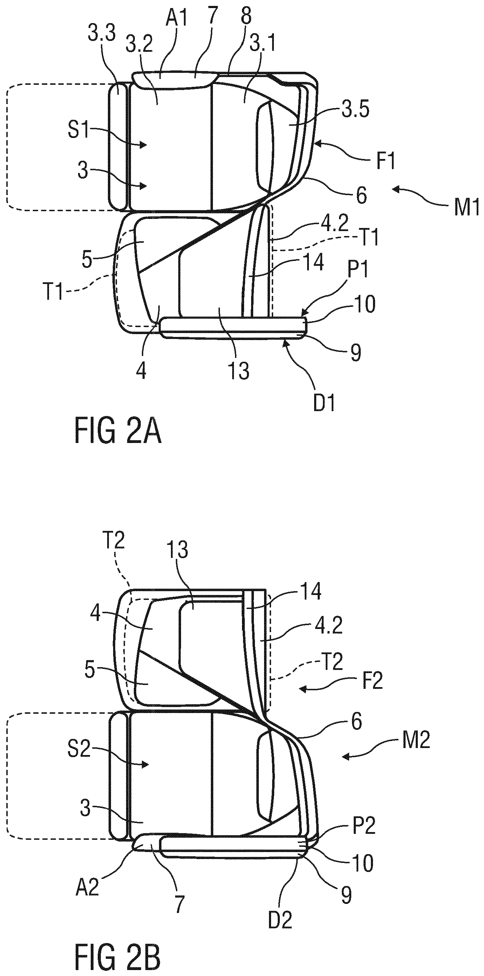

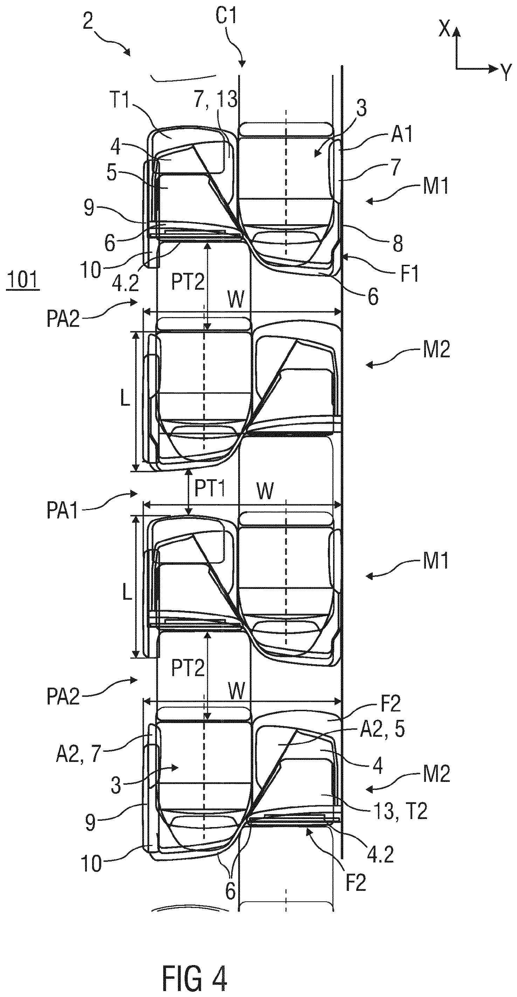

**Figure 1** shows a schematic overview of an assembly set 1 of common components C for creating different seat units M1 to Mn (shown in **figure 1** schematic, in **figures 2A to 3E** in detail) and variable passenger seating arrangements 2 in a cabin 100 (shown in **figures 4 to 17****).**

The assembly set 1 comprises at least a plurality of seating modules or seat units M1 to Mn.

Each of the seat units M1 to Mn are created by a set of components C, e.g. furniture and/or seat components, of at least one of a plurality of seat assemblies S1 to Sn, a plurality of seat shell structures F1 to Fm, a plurality of armrest structures A1 to Ai, a plurality of door structures D1 to Dk, a plurality of privacy dividers P1 to Pq and a plurality of table structures T1 to Ta.

The different seat units M1 to Mn are formable by different combinations of common components C. In particular, each of the different seat units M1 to Mn is created by one of the seat assemblies S1 to Sn, one of the seat shell structures F1 to Fm, one of the armrest structures A1 to Ai, one of the door structures D1 to Dk, one of the privacy dividers P1 to Pq, and one of the table structures T1 to Ta.

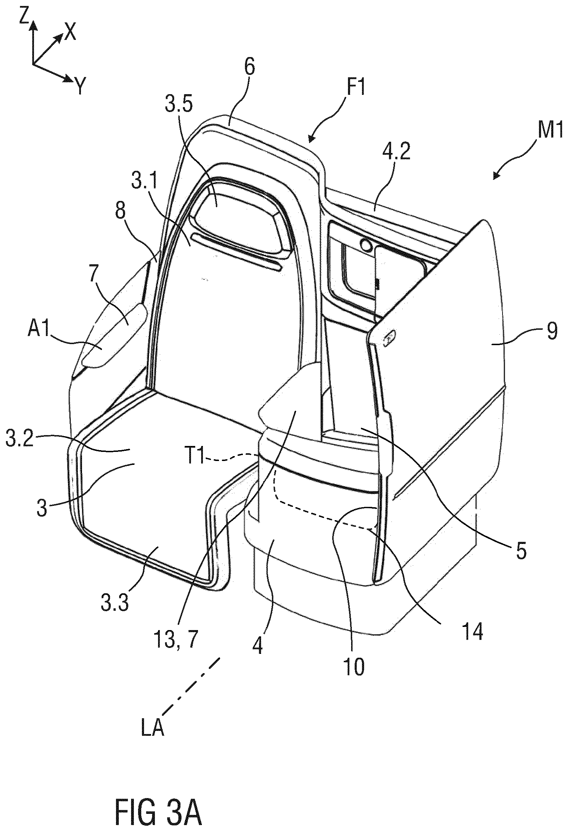

Each of the seat units M1 to Mn comprises a furniture structure having at least one of the seat shell structures F1 to Fm, one of the armrest structures A1 to Ai, one of the door structures D1 to Dk, one of the privacy dividers P1 to Pq or partition wall, and one of the table structures T1 to Ta. In particular, each of the seat units M1 to Mn formed by the furniture structure, e.g. by the seat shell structures F1 to Fm, the privacy dividers P1 to Pq and/or the door structures D1 to Dk can provide an enclosed suite (shown in **figures 3A to 3E****).**

In particular, each of the furniture or seat shell structure F1 to Fm has at least a partition wall, a wall structure 6, to separate the seat units M1 to Mn from each other. The partition wall structure 6 is a wall arranged behind each seat 3 of the seat units M1 to Mn and separates them from each other in the longitudinal direction of the cabin 100.

The side of the seat unit M1 to Mn which is bordering the aisle can be part of the seat shell structure F1 to Fm. In particular, the seat shell structure F1 to Fm may comprise a pre-assembled privacy wall 10. For instance, the aisle side having such a privacy wall 10 provides privacy to a passenger seated in a corresponding seat unit M1 to Mn from other seat units M1 to Mn positioned opposite the aisle.

Each seat assembly S1 to Sn comprises at least a seat 3 being adjustable between at least a seating position and at least a bed position. Each seat 3 comprises at least a backrest 3.1 and a seat pan 3.2. Additionally, the seat 3 may comprise optionally a leg-rest 3.3 and/or a headrest 3.5. For instance, the seat 3 can be brought into one or more positions, e.g. into a taxi, take-off, landing position, designated as "TTL" or "TT&L"-position, an inclined position or a sleeping or bed position. Particularly, in the sleeping position the seat pan 3.2, the backrest 3.1 and optionally the leg-rest 3.3 and/or headrest 3.5 are brought into a substantially flat, horizontal position.

Each seat shell structure F1 to Fm is part of the furniture structure. In a possible embodiment, each seat shell structure F1 to Fm of each seat unit M1 to Mn comprises at least a console forming a footwell 4 for a passenger seated behind and/or a utility surface 5 for a corresponding passenger of the seat unit M1 to Mn. Optionally, the seat shell structure F1 to Fm comprises wall structure 6, e.g. a separating wall.

In particular, the console, e.g. the footwell 4 comprises an open space 4.1. In particular, the open space 4.1 is arranged at a rear side of the footwell 4 facing towards the passenger seated behind, such that the footwell 4 is accessible for a rear passenger. Optionally, the footwall 4 may comprise a panel 4.2 (dotted line) arranged above the footwell 4 to separate the respective seat unit M1 to Mn from another one of the seat units M1 to Mn.

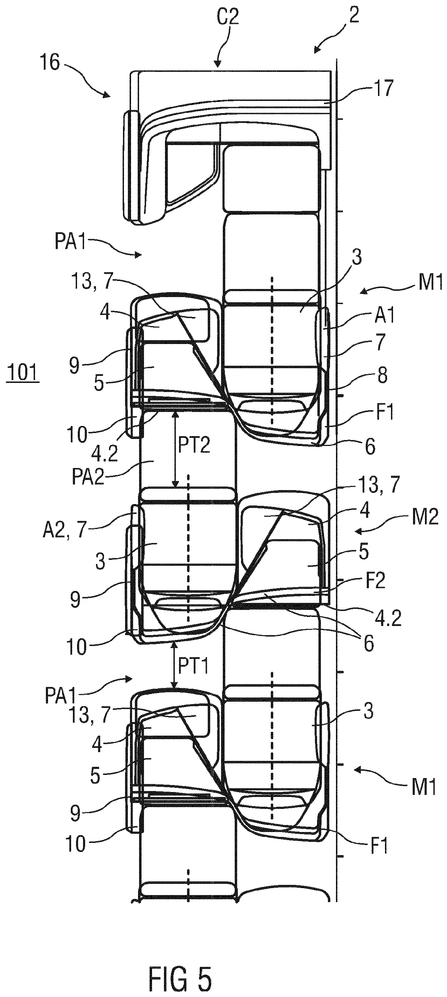

Furthermore, the adjustable seat 3 can be brought into the sleeping position, in particular a bed position, such that the seat 3 is partially projecting into the footwell 4 (shown for instance in **figure 5****).** Therefore, the console of the footwell 4 and a corresponding footwell space can be seen as an extension space for the rear passenger.

Further, the seat shell structure F1 to Fm can comprise an inner support surface portion which is fixed to the footwell 4 inside the footwell space. When the seat 3 is brought into the sleeping position, the leg-rest 3.3 comes into contact with the support surface portion of the footwell 4 such that a sleeping surface is extended for the rear passenger. The support surface portion has a corresponding shape with a shape of the leg-rest 3.3.

The utility surface 5 for the corresponding passenger of the seat unit M1 to Mn is provided as an upper support surface portion on the footwell 4 or the console and/or adjacent to the footwell 4. For example, the utility surface 5 can comprise a shelf, a table, storage space and storage means. The storage means can provide storage space for a remote control, magazines, suitcases, shoes, headphones or other items belonging to the passenger or airline. Additionally, the utility surface 5 can comprise service and operational elements, such as switches and HMI-panel to control operable features of the seat unit M1 to Mn.

The armrest structure A1 to Ai for the corresponding passenger of the seat unit M1 to Mn is provided as a furniture structure, in particular a support surface portion arranged next to the corresponding seat 3. Thereby, the armrest structure A1 to Ai comprises at least an armrest 7. Optionally, the arm rest structure A1 to Ai comprises support structure 8, e.g. a partition or separating wall.

The armrest 7 can be movable such that at least an extended sleeping surface is created when the armrest 7 is in a stowed position. In particular, the armrest 7 is arranged at a same height as the seat 3 in the bed position. For instance, the armrest 7 is one of a dropping armrest. Additionally, the armrest 7 can provide a storage space for the passenger.

In another exemplary embodiment, the armrest 7 can be configured as a furniture structure with a fixed height, in particular a height higher as the height of the seat 3 in the bed position or of the seat pan 3.2 in the TTL position or seating/comfort position.

In a further embodiment, the armrest 7 may flip up from the support structure 8.

The door structure D1 to Dk comprises at least a privacy door 9 and/or a privacy wall 10. The privacy door 9 may be configured as a separate door which is movable along a bordering side of the seat unit M1 to Mn. The privacy door 9 may be configured as a single or double door with a door part on each side. A double door design allows a private mini suite design.

The privacy wall 10 may be arranged on e.g. an aisle bordering side of the seat unit M1 to Mn. The privacy wall 10 can comprise the movable privacy door 9 for at least partially closing a pitch and a passenger access.

The privacy divider P1 to Pq can comprise a movable or fixed privacy screen 11, shown as dotted line. The privacy screen 11 may be arranged on an opposite side of the door structure D1 to Dk of a seat unit M1 to Mn. The privacy screen 11 may be configured as a 2- or 3-pieces dropping screen means. The multi-pieces/parts privacy screen 11 may be telescopically stowable such that different heights and/or functions are available. In particular, in a lowest position of the privacy screen 11, the area adjacent to the privacy screen 11 can be used as a lateral footwell or foot space. In a middle position of the privacy screen 11, an upper support portion of the privacy screen 11 can be used as a lateral armrest or support surface for the passenger. Additionally or optionally, the privacy screen 11 can comprise one of a flip-armrest, a fold down or fold up armrest which is stowable within a vertical plane in the privacy screen 11. In a deployed position, the armrest can provide a horizontal arm support to the corresponding passenger. For example, the armrest is pivotably mounted to the privacy screen 11 by means of hinge connections. In an upper position of the privacy screen 11, the privacy screen 11 is used e.g. as a divider between two seat units M1 to Mn or as a separator to an aisle 101, as exemplarily shown in figure 5. The different screen parts/pieces from down to up may have different weight, thickness and/or material. E.g. lower component may form a cover and/or stowage element, a middle component may form an armrest and/or an upper component of the privacy screen 11 may form a privacy wall or separating wall.

Furthermore, each seat unit M1 to Mn comprises one of the table structures T1 to Ta. The table structure T1 to Ta is configured as a foldable or movable table 12. The table 12 is movable between a stowed position and a use position. For instance, the table structure T1 to Ta can be arranged adjacent each of the seat assemblies S1 to Sn, for example within the corresponding console. Optionally or additionally, the table structure T1 to T4 is arranged on a rear side of each console that means above each of the footwells 4, whereas the table structure T1 to T4 can be deployed towards a passenger seated behind the said footwell 4.

**Figures 2A to 2D** show in each case a schematic top view of different seat units M1 to M4.

**Figures 3A to 3E** show in each case a perspective view of different seat units M1 to M4.

According to the disclosure, a plurality of similar or different seat units M1 to Mn in at least one column C1 to Cx and/or in a vehicle cabin 100 are configured in such a manner that in an assembled state of the different seat units M1 to Mn each of the seat units M1 to Mn has a congruent ground plan or identical outer dimension. In particular, such a congruent and/or identical configuration of the different seat units M1 to Mn allows a variable arrangement of the different seat unit M1 to Mn, in particular a wide variety of different layouts to be created from a relatively small set or catalogue of components C.

Furthermore, the different seat units M1 to Mn are configured such that each of them having some components C of the assembly set 1 that can be used to create different cabin layouts, e.g. inline/outline/herringbone seating combinations.

In particular, different seat shell structures F1 to Fm, e.g. furniture parts, comprise a number of common basic equipment parts, e.g. identical panels 4.2, identical wall structures 6, identical armrests 7, privacy doors 9, privacy walls 10 and/or privacy screens 11, tables 12, add-on furniture parts 13 and/or support surface portion 14 for each seat unit M1 to Mn.

According to another aspect, the different seat shell structures F1 to Fm, e.g. furniture parts, are assembled with respect to each other such that at least dimensions of each seat unit M1 to Mn remain substantially the same.

Each seat unit M1 to Mn comprises a longitudinal side bordering an aisle of the vehicle cabin (shown in **figures 2A to 17****).** On this longitudinal side of the seat unit M1 to Mn, one of the door structures D1 to Dk is arranged.

In an exemplary embodiment, each seat unit M1 to Mn comprises at least one console or seat shell structure F1 to Fm and one seat assembly S1 to Sn arranged adjacent to the seat shell structure F1 to Fm.

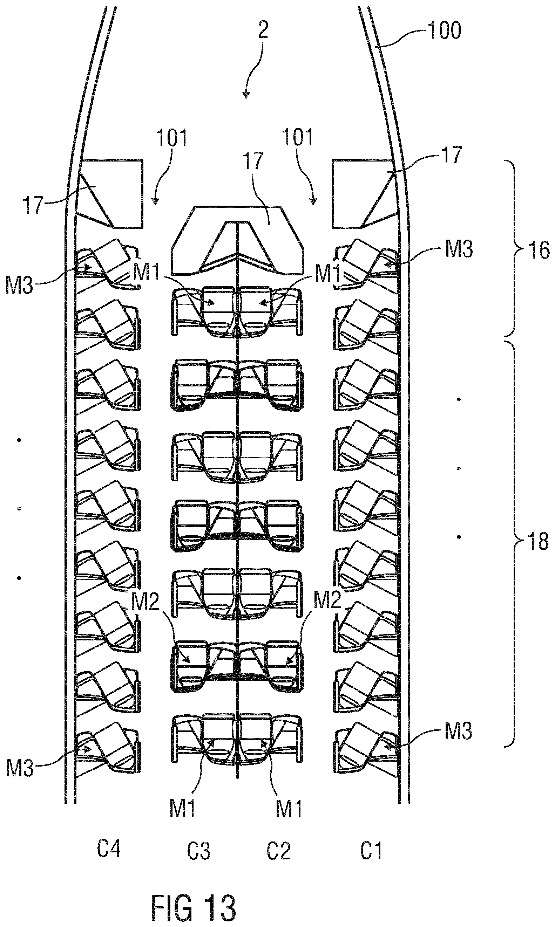

Moreover, each or some of the seat units M1 to Mn is/are one of a forward facing seat unit M1 to M2, wherein at least a longitudinal axis of the seat 3 of one of the forward facing seat units M1 to M2 is parallel to a longitudinal axis LA of the vehicle cabin (shown in **figures 13 to 17****).**

In another exemplary embodiment, each or some of the seat units M1 to Mn is/are configured as an angled seat unit M3 to M4, wherein at least the longitudinal axis of the seat 3 of one of the angled seat units M3 to M4 is angled relative to the longitudinal axis LA of the vehicle cabin 100. The seat 3 of an angled seat unit M3 to M4 may be angled inwardly or outwardly.

As best seen in **figures 2A to 2D** **and 3A to 3D,** for each seat unit M1 to Mn, a width W, e.g. a maximum width, of the seat unit M1 to Mn in a transverse direction of the cabin 100, a length L, e.g. a maximum length, and/or a height H, e.g. a maximum height, of the seat unit M1 to Mn, in particular at least the rear shell wall structure 6 is substantially identical. In particular, the seat units M1 to Mn of each layout provide common utility surface dimensions.

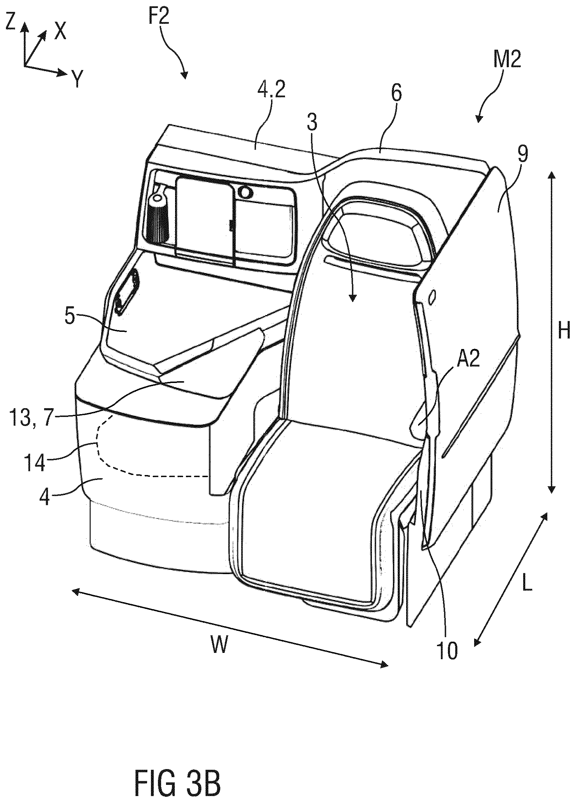

In particular, **figures 2A and 2B** show a top view and **figures 3A** **and** **3B** show a perspective view of a seat unit M1 or M2, each of the seat unit M1 or M2 includes a seat 3 which is essentially parallel to a wall structure 6, e.g. a rear wall or panel, arranged on a backside of the seat 3 **(****figures 2A****,** **3A****,** **2B****,** **3B****)** and/or to a privacy divider P1, e.g. a privacy wall 10, side wall or panel, arranged on a lateral side of a footwell 4 **(****figures 2A****, 3A)** or of the seat 3 **(****figures 2B****, 3B).** The wall structure 6 and the privacy divider P1 may be formed as a pre-assembled sub-module of the respective seat shell structure F1 or F2.

The wall structure 6 as a separation panel to another seat unit M1 to Mn behind the seat 3 in the same column C1 and the lateral privacy divider P1 as bordering wall to an adjacent aisle are configured as furniture parts which at least partially surrounds the seat 3 and provides a passenger access. A console configured as the footwell 4 and/or storage structure is adjacent to the seat 3 may be pre-assembled with the rear wall structure 6 and/or the lateral privacy divider P1 and provides at least a utility surface for the corresponding passenger of the seat 3 and a stowage compartment adjacent to the seat 3 and the footwell 4 for a rear passenger seated behind.

Optionally, each seat unit M1 or M2 may comprise an add-on furniture part 13 providing different shapes for different kinds of seat units M1 or M2. In particular, the add-on furniture part 13 of seat unit M1 comprises an add-on armrest part or a side surface providing different dimension to fit into each of the desired seat units M1 or M2 and to cover free space.

Furthermore, the footwell 4, e.g. the console, comprises an open space at a rear side facing towards the passenger seated behind, such that the footwell is \ accessible for a rear passenger. For instance, the adjustable seat 3 can be brought into the sleeping position, in particular a bed position, such that the seat 3 is partially projecting into the footwell 4. Therefore, the footwell space of the console can be seen as an extension space for the rear passenger. The footwell 4 may comprise a support surface portion 14 which is fixed inside the footwell space. When the seat 3 is brought into the sleeping position, the leg-rest 3.3 comes into contact with the support surface portion 14 of the footwell 4 such that a sleeping surface is extended for the rear passenger. The support surfaced portion 14 has a corresponding outer rear shape with an outer front shape of the leg-rest 3.3 and an outer shape with an inner shape of the footwell 4.

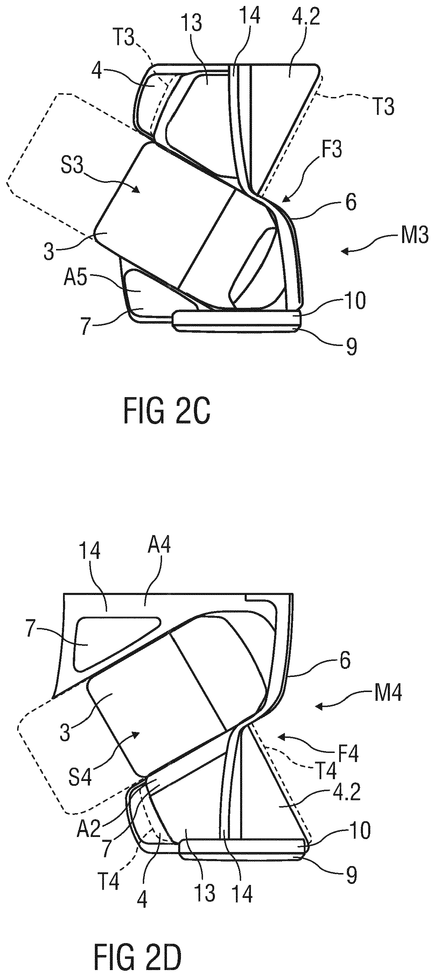

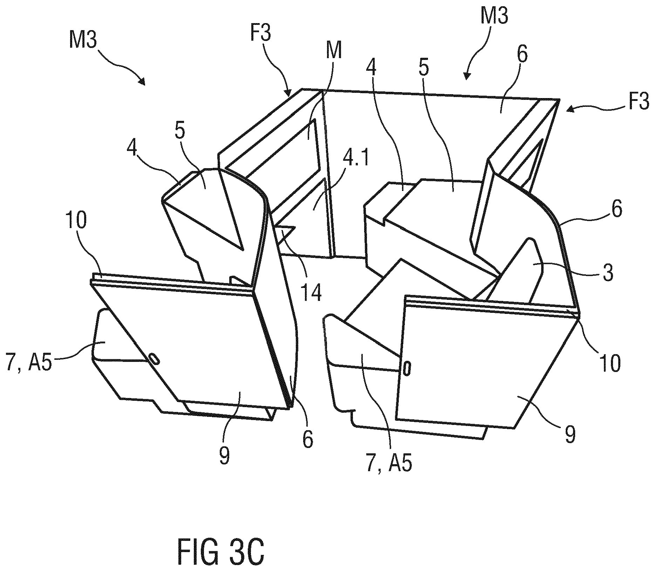

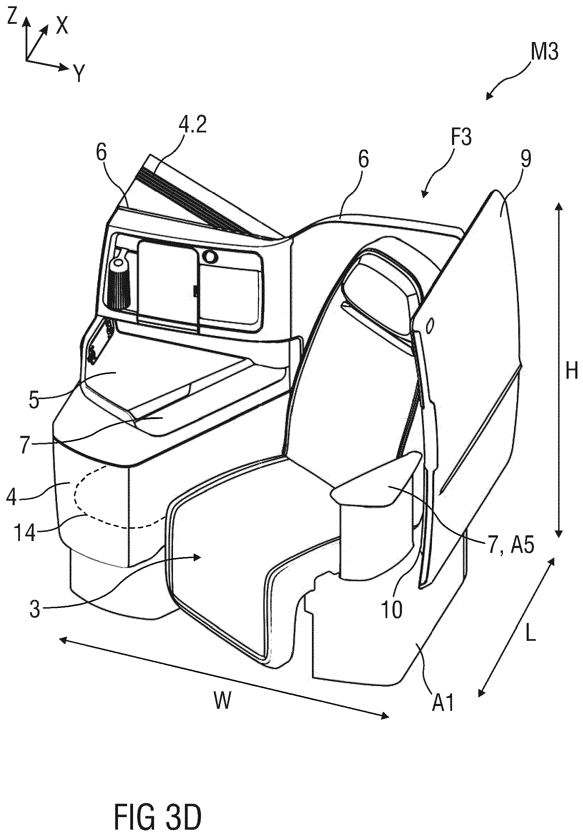

In particular, **figures 2C and 2D** show a top view and **figures 3C** **and** **3D** show a perspective view of a seat unit M3 or M4, each of the seat unit M3 or M4 includes a seat 3 which is angled with respect to a wall structure 6, e.g. a rear wall or panel, arranged on a backside of the seat 3 **(****figures 2C****,** **3C****,** **2D****,** **3D****)** and/or to a privacy divider P1, e.g. a privacy wall 10, side wall or panel, arranged on a lateral side of a footwell 4 **(****figures 2C****, 3C)** or of the seat 3 **(****figures 2D****, 3D).**

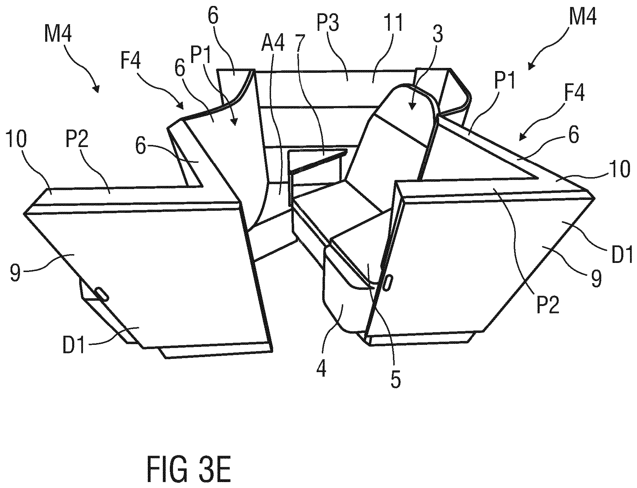

**Figures 2C****,** **3C****,** each of them shows an outwardly angled seat configuration. **Figures 2D** **and** **3E****,** each of them shows an inwardly angled seat configuration. Each of the mentioned configurations depends on an orientation of the seat 3 with respect to the aisle 101. Particularly, each of the configurations comprises a seat 3 positioned at an angle of about 30° to 50°, in particular 45°, with respect to the aisle, e.g. facing away from the aisle (= outwardly angled seat) or towards the aisle (= inwardly angled seat).

The wall structure 6 and the privacy divider P3 may be formed as a pre-assembled sub-module of the respective seat shell structure F3 or F4.

The wall structure 6 as a separation panel to another seat unit M3 to Mn behind the seat 3 in the same column C1 and the lateral privacy divider P1 as bordering wall to an adjacent aisle 101 or a cabin side wall are configured as furniture parts which at least partially surrounds the seat 3 and provides a passenger access. A console configured as the footwell 4 and/or storage structure is adjacent to the seat 3 may be pre-assembled with the rear wall structure 6 and/or the lateral privacy divider P1 and provides at least a utility surface for the corresponding passenger of the seat 3 and a stowage compartment adjacent to the seat 3 and the footwell 4 for a rear passenger seated behind.

Additionally, each of the seat units M3 or M4 comprises a movable armrest 7 which provides a sleeping surface extension in a stowed position.

**Figures 4 to 7** show in each case a top view of an embodiment of different passenger seating arrangements 2 in a column C1 to C4.

**Figures 4** **and** **5** show passenger seating arrangements 2 having a number of forward facing seat units M1 or M2 arranged in an alternating manner in the same column C1 or C2.

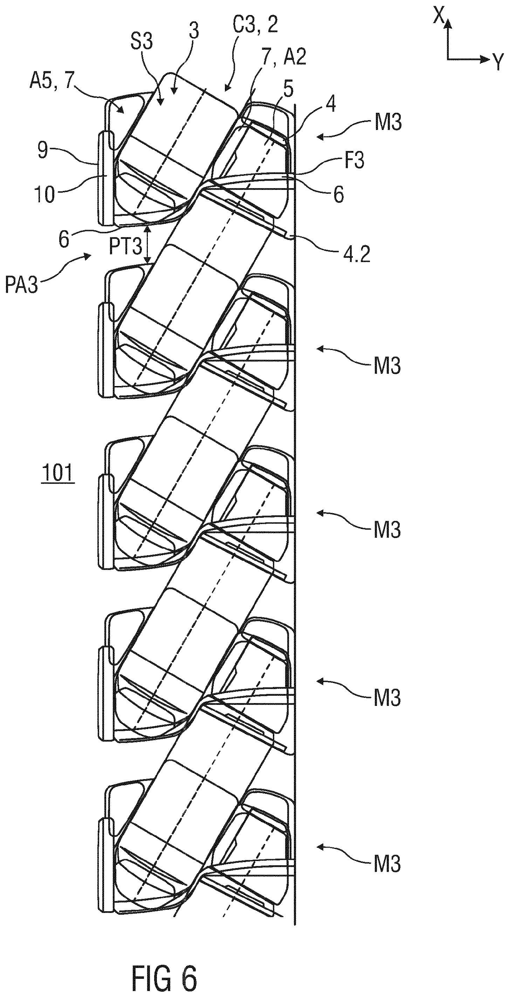

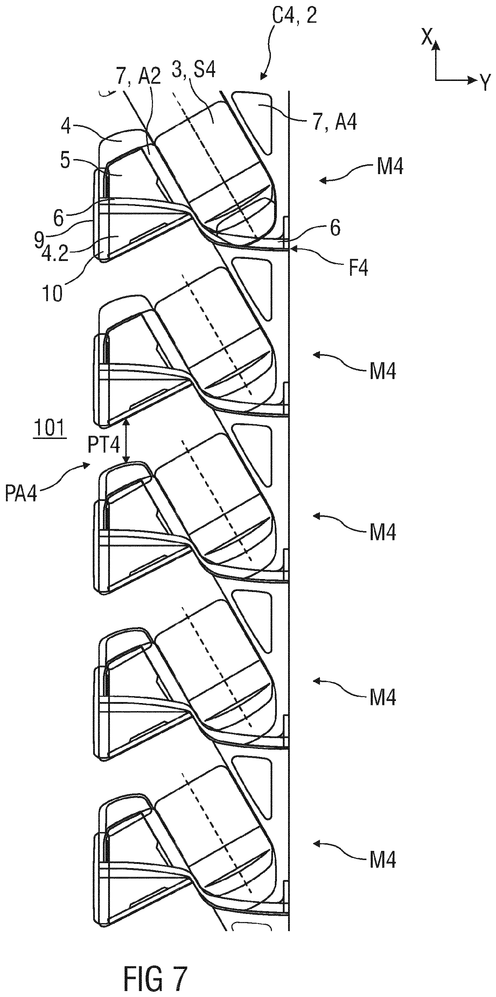

**Figures 6** **and** **7** show passenger seating arrangements 2 having a number of same angled seat units M3 or M4 arranged in a staggered manner in the same column C3 or C4.

Each of the seat units M1 to M4 of each of the passenger seating arrangements 2 are created by common components C of the assembly set 1.

Each of the seat units M1 to M4 of each of the columns C1 to C4 are arranged next to an aisle 101 in a cabin 100.

The seat units M1 to M4 of each of the columns C1 to C4 are distanced from each other by a pitch PT1 to PT4 providing a passenger access PA1 to PA4. In particular, each seat 3 of the corresponding seat unit M1 to M4 is separately accessible by its passenger access PA1 to PA4 from a corresponding aisle 101.

The passenger access PA1 or PA2 extends essentially perpendicular to the corresponding aisle 101. The passenger access PA3 or PA4 are angled with respect to the corresponding aisle 101.

Each of the seat units M1 to M4 has a congruent ground plan or identical outer dimension. In particular, the assembly set 1 comprises two primary seat units M1 to M2, in particular furniture or seat shell structure F1 and F2. The assembly set 1 comprises two further primary seat units M3 to M4, in particular seat shell structures F3 and F4, which are mirrored with respect to the other primary seat units M1 to M2, in particular the primary seat shell structures F1 to F2.

These primary seat units M1 to M4, e.g. the seat shell structures F1 to F4, are similar in all dimensions, e.g. in all X, Y and Z dimensions. These seat units M1 to M4 share similar styling identity and character. Further, these seat units M1 to M4 house common components C, in particular common assemblies such as suite privacy doors D1 to D4, seat controls for the seat 3 and bed positions, reading lights, suite lamps, upper furniture and top shell cappings. In other words: Privacy doors D1 to D4, kinematics of the seats 3 and/or doors D1 to D4, infotainment units and/or tables 12 are repeatable common functional parts or elements.

The seat units M1 to M4 house the same seat assembly S1 to S4 with the same seat 3. In particular, each of the seat assemblies S1 to S4 has the same wire harnessing and same build methodology.

The key differences in the seat units M1 to M4 created by the components C of the assembly set 1 are the orientation, e.g. angle of the seats 3 with respect to the aisles 101 in the cabin 100 and/or the longitudinal axis LA of the cabin 100 or aircraft centreline.

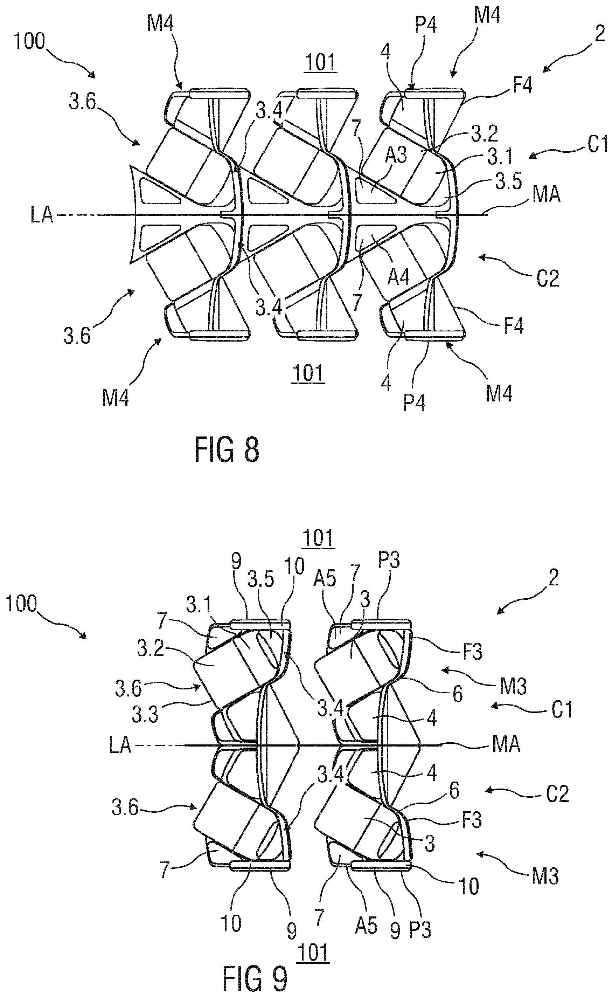

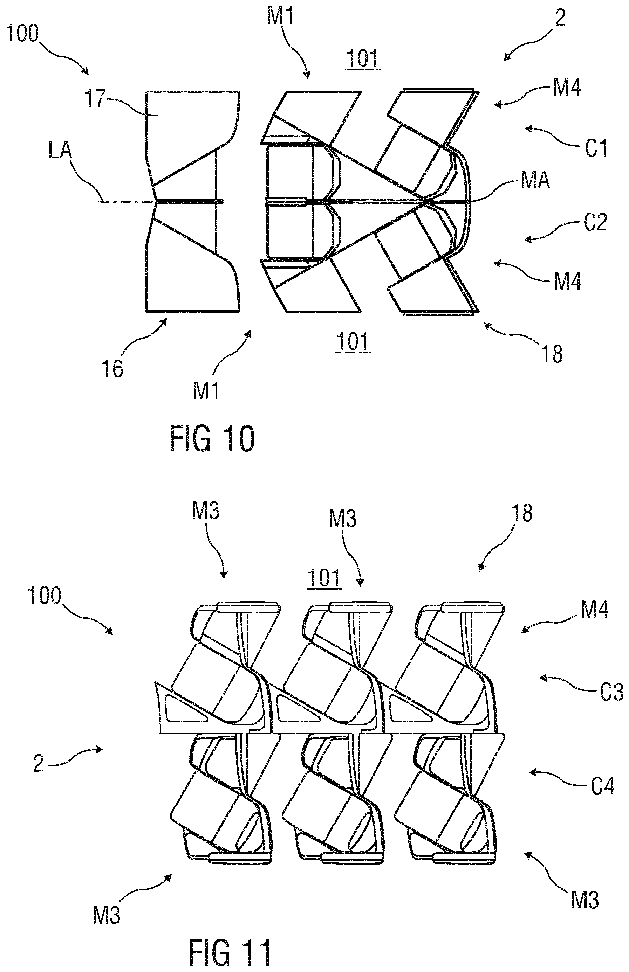

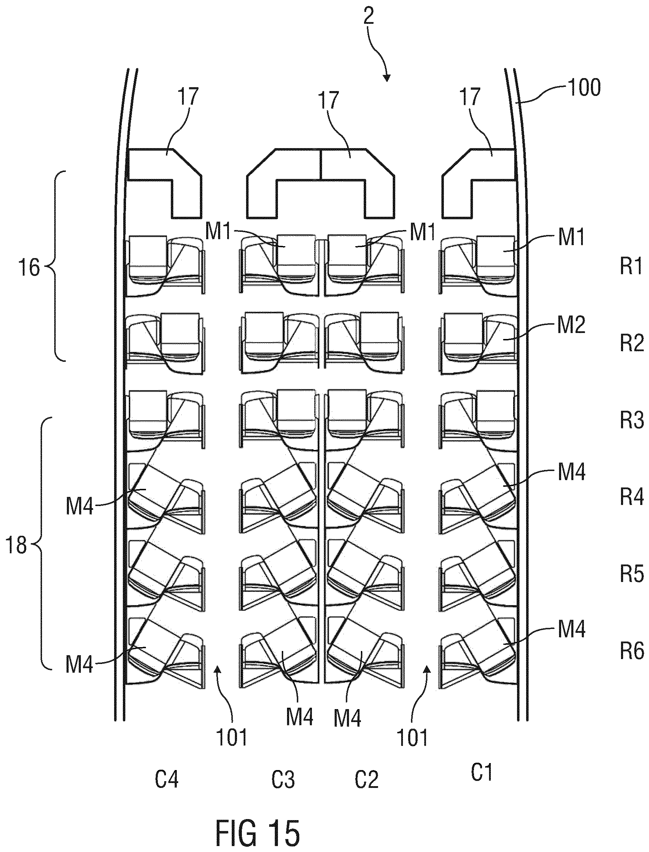

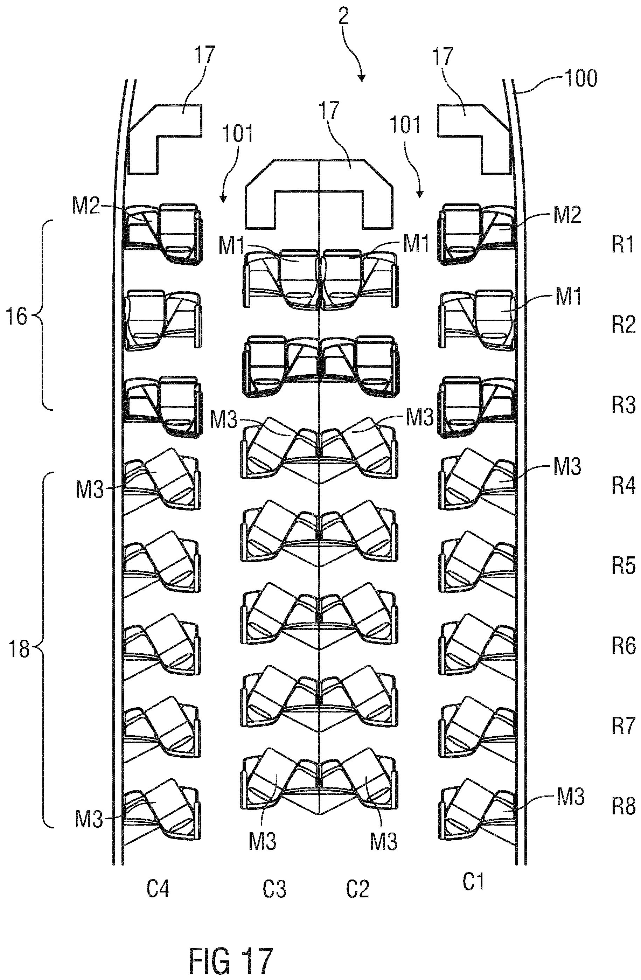

The primary seat units M1 to M4 ensure alignment of each seat units M1 to M4 behind each other and next to each other in an angled manner and/or in a staggered manner, e.g. in an outboard facing herringbone arrangement (shown in **figures 7****,** **8****,** **11****,** **12** and in partial in **figures 10****, 13-17),** in an inboard facing herringbone arrangement (shown in **figure 9** and in partial in **figures 15****, 17)** and/or in a staggered in-line arrangement (shown in partial in **figures 7****, 12-17).**

Using of the above described assembly set 1 of common components C and/or parts, common dimensions and styling permits usually dissimilar seat types to be arranged together in the same cabin 100. The unique dimensions and/or connective geometry of the seat units M1 to Mn allows herringbone and inline seating arrangements to join end to end in a single column C1 to C4 and also creates unique passenger seating arrangements 2 in this respect. Further, the unique dimensions and/or geometry of a few number of seat units M1 to M4 allows cabin optimisation and a wide variety of different cabin layouts to be created from a relatively small catalogue of common components C:

Due to the different orientations of the seats 3 of the seat units M1 to M4, a monitor M (shown for example in figure 3D) of each of the seat units M1 to M4 is orientated similarly to the orientation of the corresponding seat 3 of the corresponding seat unit M1 to M4 and positioned on a seat shell structure F1 to F4 of an identical seat unit M1 to M4 in front of the corresponding seat 3.

The assembly set 1 comprising the different common components C may be used to create a number of different seating layouts or passenger seating arrangements 2 within the cabin 100 as for example shown in **figures 8 to 17** and described below:
**Figures 8 to 12** show in each case a top view of an embodiment of a passenger seating arrangement 2 comprising pairs of adjacent seat units M1 to M4 in two adjacent columns C1 to C4.

Each of the seat units M1 to M4 are formed by components C of the assembly set 1.

Depending on an interior space of the cabin 100, a number of seat units M1 to Mn of each section can be varied. Further, the number of the seat units M1 to Mn and also the division into sections can be varied as desired, by e.g. an airline itself wherein each of the seat units M1 to Mn of the different passenger seating arrangement 2 e.g. for different airline are created by components C of the assembly set 1.

**Figure 8** shows a section of passenger seating arrangement 2 as an embodiment of two adjacent columns C1 and C2. Each of the columns C1 and C2 comprises a number of identically angled seat units M4 with respect to the corresponding aisle 101. The several, e.g. inwardly angled seat units M4 are identically arranged behind each other, wherein the seats 3 of the angled seat units M4 are identically angled in the same column C1 or C2. This ensures alignment of each front footwell 4 with each rear seat 3 of the angled seat units M4. This passenger seating arrangement 2 with several identical inwardly angled seat units M4 behind each other in the same column C1 and C2 forms an inward, e.g. inboard faced herringbone seating configuration.

The seat units M4 are created by seat shell structures F4 which are mirrored to each other at the shown mirror axis MA. The respective seats 3 are oriented in a given angle, e.g. in an area between 30° to 60°, in particular approximately 45°, with respect to the mirror axis MA and in a given sum angle, e.g. in an area between 60° to 120°, in particular approximately 80° to 90° away from each other. In particular, the seats 3 are oriented in such an angle that rear seat portions 3.4, in particular the backrests 3.1 of the adjacent seats 3 in comfort seating position or headrests 3.5 of the adjacent seats 3 in bed position are arranged next to each other, in particular are nearly touching each other. The footwells 4 adjacent to the seats 3 of the front seat units M3 and M4 for the rear passenger of the rear seat units M4 are arranged on the outer lateral sides of the seats 3 of the front seat units M4 and are positioned next to the privacy divider P4. Armrest structures A3 and A4 with movable armrests 7 are arranged on the inner lateral sides of the seats 3 of each seat unit M4 and are positioned next to each other, in particular are nearly touching each other.

**Figure 9** shows a section of passenger seating arrangement 2 as an embodiment of two adjacent columns C1 and C2. Each of the columns C1 and C2 comprises a number of identically angled seat units M3 with respect to the corresponding aisle 101. The several, e.g. outwardly angled seat units M3 are identically arranged behind each other, wherein the seats 3 of the angled seat units M3 are identically angled. This ensures alignment of each front footwell 4 with each rear seat 3 of the angled seat units M3. This passenger seating arrangement 2 with several identically outward angled seat units M3 behind each other in the same column C1 and C2 forms an outward, e.g. outboard faced herringbone seating configuration.

As best seen from **figures 8 and 9****,** according to the disclosure, identical seat units M3 and M4 can be used for two different passenger seating arrangement 2, e.g. for inwardly or outwardly faced herringbone seating configurations.

The seat units M3 are created by seat shell structures F3 which are mirrored to each other. The respective seats 3 are inclined in a given angle, e.g. in an area between 30° to 60°, in particular approximately 45°, with respect to the mirror axis MA and in a given sum angle, e.g. in an area between 60° to 120°, in particular approximately 70° to 90° towards to each other. In particular, the seats 3 are inclined in such an angle that front seat portions 3.6, in particular the seat pans 3.2 of the adjacent seats 3 in comfort seating position or leg rests 3.3 of the adjacent seats 3 in bed position are arranged next to each other, in particular are nearly touching each other.

The footwells 4 adjacent to the seats 3 of the front seat units M3 for the rear passenger of the rear seat units M3 are arranged on the inner lateral sides of the seats 3 of the front seat units M3 and are positioned next to each other, in particular are nearly touching each other. Armrest structures A5 with movable armrests 7 are arranged on the outer lateral sides of the seats 3 of each seat unit M3 and are positioned next to the privacy divider P3.

**Figure 10** shows another section of a passenger seating arrangement 2 with several forward facing seat units M1 arranged in a front row section 16 of the cabin 100. This passenger seating arrangement 2 forms an in-line passenger seating layout for the front row section 16 in the cabin 100. Each of the forward facing seat units M1 is followed by at least one inwardly angled seat unit M4.

Depending on assistance and monumental structures 17, e.g. interior structures, galley structures, interior trims or fittings within the cabin 100, it is desirable to position the seat units M1 and M2 such that the passenger seating arrangement 2 is optimised. For this purpose, the forward facing seat units M1 may be arranged in the front row section 16 (shown in **figure 10****)** and/or the rear row section (not shown) of the cabin 100 to take up less width. The interior or monumental structures 17 can comprise a galley, lavatories, doors, emergency exits, staff storage means, electronic compartments etc. around which the seat units M1 and M2 must be arranged.

Outwardly or inwardly angled seat units M3 and M4 are arranged behind the forward facing seat units M1 and M2, e.g. in a center section 18 of the cabin 100. In the center section 18 of the cabin 100, a width W/length L trade-off allows a space-efficient passenger seating arrangement 2, wherein a space in the front row section 16 of the cabin 100 can be maximised.

**Figure 11** shows another section of a passenger seating arrangement 2 with two columns C3 and C4 of outwardly and inwardly angled seat units M3 and M4 which are identically configured by common components C as described above and identically angled with respect to the aisles 101. For instance, the cabin 100 can comprise one or more identical outer columns C3 and C4 which are arranged along a center cabin wall of the vehicle cabin 100. Alternatively, the identical columns C3 and C4 may be arranged in a center section 18 with aisles 101 on each outer lateral side of the seat units M3 and M4.

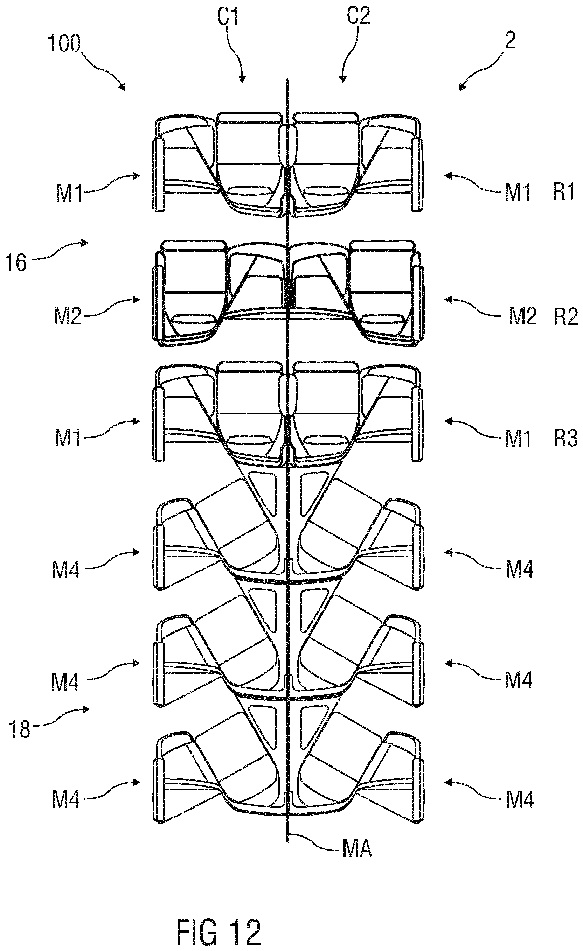

**Figure 12** shows another section of a passenger seating arrangement 2 with a few numbers of rows R1 to Rz of forward facing seat units M1 and M2 which are arranged in a staggered manner and behind each other. The passenger seating arrangement 2 comprises further a number of outwardly angled seat units M3 and M4. The inwardly angled seat units M4 in each column C1 and C2 are identically configured by the components C of the assembly set 1 and identically angled.

**Figures 13 to 17** show in each case a top view of an embodiment of a section of a passenger seating arrangement 2 in a cabin 100, e.g. a vehicle cabin or aircraft cabin.

**Figure 13** shows a section of a passenger seating arrangement 2. The cabin section comprises next to each cabin wall of the cabin 100 a single column C1 and C4 having identically outwards angled seat units M3. In a center section 18 of the cabin 100, two columns C2 and C3 are provided with forward facing seat units M1 and M2. The forward facing seat units M1 and M2 are arranged behind each other in the longitudinal direction of the cabin 100 and are staggered.

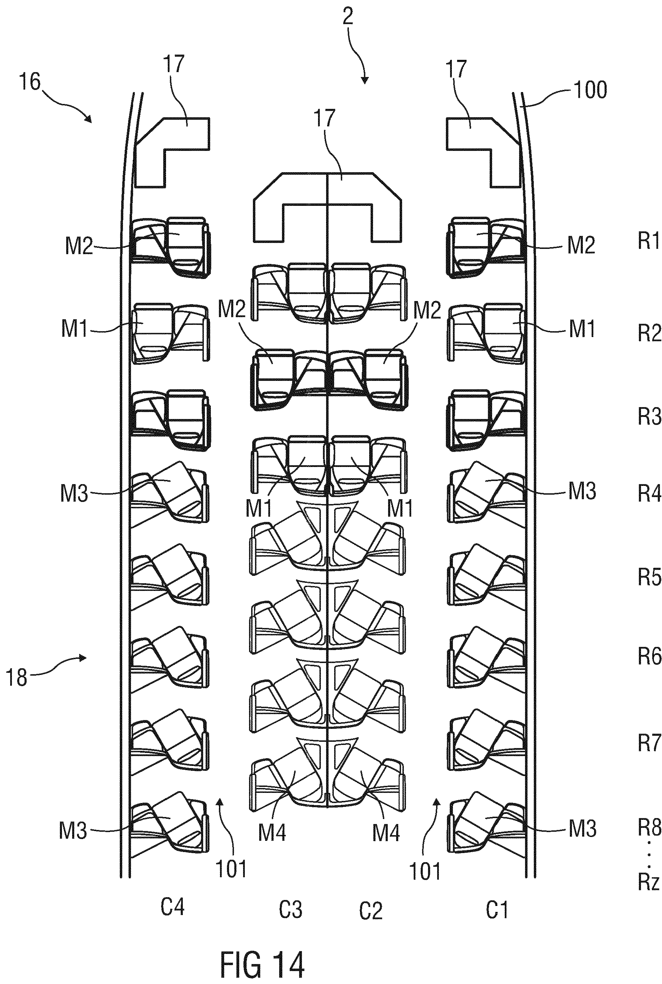

**Figure 14** shows another section of a passenger seating arrangement 2. The cabin section comprises four columns C1 to C4 wherein at least two of the columns C2 and C3 are center columns and the other two are outer columns C1 and C4. Each of the columns C1 to C4 has in a front row section 16 three rows R1 to R3 comprising forward facing seat units M1 and M2 which are arranged behind each other in the longitudinal direction of the cabin 100 and are staggered.

Furthermore, each of the columns C1 to C4 has in a center section 18 four or five rows R4 to R7 or R8 of several outwardly and inwardly angled seat units M3 and M4.

**Figures 15 to 17** show further possible passenger seating arrangements 2.

**Figure 15** shows another section of a passenger seating arrangement 2. The cabin section comprises four columns C1 to C4 wherein at least two of the columns C2 and C3 are center columns and the other two are outer columns C1 and C4. Each of the columns C1 to C4 has in a front row section 16 three rows R1 to R3 comprising forward facing seat units M1 and M2 which are arranged behind each other in the longitudinal direction of the cabin 100 and are staggered.

Furthermore, each of the columns C1 to C4 has in a center section 18 three rows R4 to R6 of several inwardly angled seat units M4.

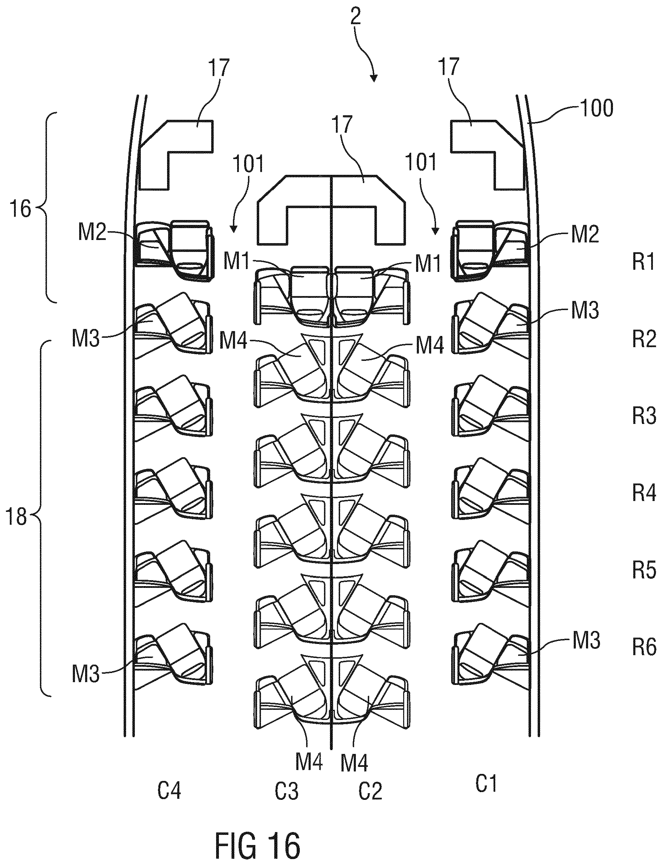

**Figure 16** shows a cabin section with four columns C1 to C4. At least two of the columns C2 and C3 are center columns and the other two are outer columns C1 and C4. Each of the columns C1 to C4 has a front row section 16 with one row R1 comprising forward facing seat units M1 and M2.

Furthermore, each of the columns C1 to C4 has in a center section 18 five rows R2 to R6 of several outwardly and inwardly angled seat units M3 and M4 which are arranged behind each other in the longitudinal direction of the cabin 100 and are staggered.

**Figure 17** shows a cabin section with four columns C1 to C4. At least two of the columns C2 and C3 are center columns and the other two are outer columns C1 and C4. Each of the columns C1 to C4 has in a front row section 16 two or three rows R1 to R3 comprising forward facing seat units M1 and M2.

Furthermore, each of the columns C1 to C4 has in a center section 18 six rows R3 to R8 of several outwardly angled seat units M3 which are arranged behind each other in the longitudinal direction of the cabin 100 and are staggered.

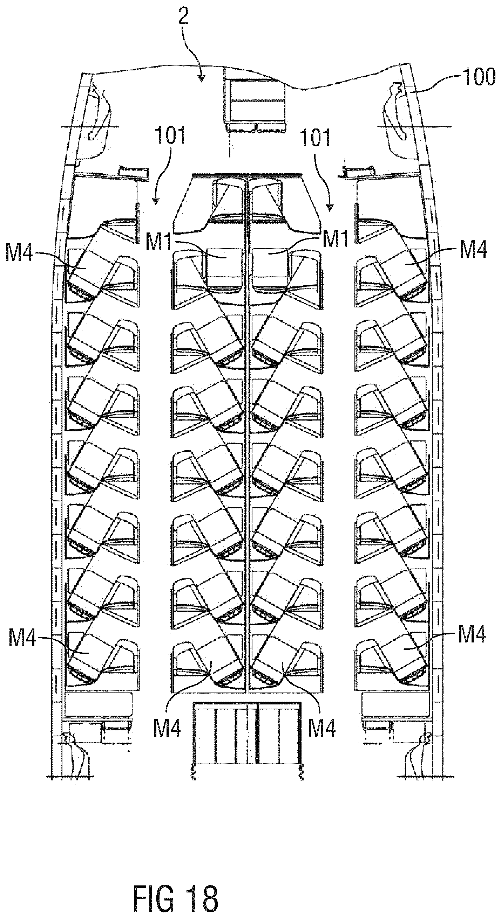

**Figure 18** shows a further embodiment of passenger seat arrangement 2 in a cabin 100 using the identical seat units M1 and M4 which are assembled in another manner so that another seating configuration is available as shown in **figures 13 to 17****.**

According to the disclosure, any other passenger seating arrangements 2 are possible and comprising outer columns C1, C4 and/or inner center columns C2 and C3 with variable and/or identical arrangement of seat units M1 to Mn - forward facing seat units M1, M2, inwardly and/or outwardly angled seat units M3 and M4. The seat units M1 to Mn are created by common components C of the assembly set 1. Furthermore, the seat units M1 to M4 are primary seat units M1 to M4 having at least seat shell structures F1 to F4 which are similar in all dimensions, e.g. in all X, Y and Z dimensions. These seat units M1 to M4 share similar styling identity and character.

In other words: A number of different overall seating layouts within the cabin 100 is configurable by assembling a number of common furniture parts of the seat shell structures F1 to Fn with respect to each other depending on an orientation of the seat 3 within desired kind of seat units M1 to Mn.

In an exemplary embodiment of the disclosure, the seat shell structures F1 to Fn comprise a number of furniture parts or common basic equipment parts for each of the seat units M1 to Mn to be provided in each of the different overall seating layouts/passenger seating arrangements 2.

In an exemplary embodiment of the disclosure, a width W of at least the rear wall structure 6 in a transverse direction of the cabin 100 and a height H of at least the rear wall 6 for each seat unit M1 to Mn are identical so that the rear wall structure 6 remains substantially the same in each layout.

In an exemplary embodiment of the disclosure, at least a shape of the console or footwell 4 for the forward or rearward facing seat unit M1 or M2 differs from a shape of the console or footwell 4 for the angled seat unit M3 or M4.

In an exemplary embodiment of the disclosure, the seat units M1 to Mn of each passenger seating arrangement 2 or layout provide common utility surface dimensions.

In an exemplary embodiment of the disclosure, wherein elements, e.g. the furniture parts, of the seat shell structures F1 to Fm are optionally assembled with a number of add-on furniture parts 13, support surface portion 14, panel 4.2 providing different shapes for different kinds of seat units M1 to Mn.

In an exemplary embodiment of the disclosure, the add-on furniture parts 13 comprise a number of add-on armrest parts each providing different dimensions to fit into each of the desired seat units M1 to Mn.

In an exemplary embodiment of the disclosure, the add-on furniture parts 13 comprise at least a side surface positionable at least partially along a side of the seat 3 to fit into each of the desired seat units M1to Mn.

### List of References

- 1: assembly set
- 2: passenger seating arrangement
- 3: seat
- 3.1: backrest
- 3.2: seat pan
- 3.3: leg-rest
- 3.4: rear seat portion
- 3.5: headrest
- 3.6: front seat portion
- 4: footwell
- 4.1: open space
- 4.2: panel
- 5: utility surface
- 6: wall structure
- 7: armrest
- 8: support structure
- 9: privacy door
- 10: privacy wall
- 11: privacy screen
- 12: table
- 13: add-on furniture part
- 14: support surface portion
- 16: front row section
- 17: monumental structure
- 18: center section
- 100: cabin
- 101: aisle
- C: component
- A1 to Ai: armrest structure
- C1 to Cx: column
- D1 to Dk: door structure
- F1 to Fm: seat shell structure
- H: height
- L: length
- LA: longitudinal axis
- M: monitor
- MA: mirror axis
- M1 to Mn: seat unit
- P1 to Pq: privacy divider
- PA1 to PA4: passenger access
- PT1 to PT4: pitch
- R1 to Rz: row
- S1 to Sn: seat assembly
- T1 to Ta: table structure
- W: width

## Claims

1. Assembly set (1) for a passenger seating arrangement (2) provided within a vehicle cabin (100) comprising at least:
- a plurality of seat units (M1 to Mn), wherein the seat units (M1 to Mn) are at least:
- a forward or rearward facing seat unit (M1 to M2), wherein at least a longitudinal axis of the seat (3) is parallel to a longitudinal axis of the vehicle cabin (100), and
- an angled seat unit (M3 to M4), e.g. inwardly or outwardly angled, wherein at least the longitudinal axis of the seat (3) is angled relative to the longitudinal axis of the vehicle cabin (100),
wherein each of the seat units (M1 to Mn) is created by components (C) of:
- at least one of a plurality of seat assemblies (S1 to Sn),
- at least one of a plurality of seat shell structures (F1 to Fm),
- at least one of a plurality of armrest structures (A1 to Ai),
- at least one of a plurality of door structures (D1 to Dk),
- at least one of a plurality of privacy dividers (P1 to Pq), and
- at least one of a plurality of table structures (T1 to Ta),
wherein the forward or rearward facing seat unit (M1 to M2) and the angled seat unit (M3 to M4) are dissimilar, the forward or rearward facing seat unit (M1 to M2) being formed by a different combination of the components (C) than the angled seat unit (M3 to M4),
wherein different seat shell structures (F1 to Fm) comprise a number of common basic equipment parts for each seat unit (M1 to Mn), the common basic equipment parts being at least one of identical panels (4.2), identical wall structures (6), identical armrests (7), privacy doors (9), privacy walls (10) and/or privacy screens (11), tables (12), add-on furniture parts (13) and/or support surface portions (14), and
wherein the different seat shell structures (F1 to Fm) are assembled with respect to each other such that at least seat unit dimensions of each seat unit (M1 to Mn) remain substantially the same, so that the forward or rearward facing seat unit (M1 to M2) and the angled seat unit (M3 to M4) have a congruent ground plan or identical outer dimensions.

2. Assembly set (1) according to claim 1, wherein, for each seat unit (M1 to Mn), a width of at least a rear shell wall in a transverse direction of the vehicle cabin (100) is substantially identical.

3. Assembly set (1) according to claim 1 or 2, wherein, for each seat unit (M1 to Mn), a height (H) of at least the rear shell wall is substantially identical.

4. Assembly set (1) according to any one of the preceding claims, wherein the seat units (M1 to Mn) of each seating layout provide common utility surface (5) dimensions.

5. Assembly set (1) according to any one of the preceding claims, wherein each seat unit (M1 to Mn) provides a seat assembly with a seat being adjustable between at least a seating position and at least a bed position.

6. Use of an assembly set (1) according to any one of the preceding claims to create a number of different seat units (M1 to Mn) and/or a number of different seating layouts within a vehicle cabin (100).

7. Passenger seating arrangement (2) for a vehicle cabin (100), e.g. an aircraft cabin, comprising:
- an assembly set according to claim 1, wherein the plurality of seat units (M1 to Mn) are arranged one behind another in one column (C1 to Cx) in a longitudinal direction (LA) of the vehicle cabin (100).

8. Passenger seating arrangement (2) according to claim 7, wherein a seating layout is one of:
- an in-line overall seating layout,
- an outwardly faced overall herringbone seating layout,
- an inwardly faced overall herringbone seating layout and
- a combination of different seating layouts for arranging the seat units (M1 to Mn) in the vehicle cabin (100),
wherein the dissimilar seat units (M1 to Mn) are adaptable with respect to each other such that each of the seat units (M1 to Mn) is positionable within each of the seating layouts.

9. Vehicle cabin (100) comprising a passenger seating arrangement (2) according to claim 7 or 8.

## Patentansprüche

1. Bausatz (1) für eine Passagiersitzanordnung (2), die innerhalb einer Fahrzeugkabine (100) bereitgestellt wird, umfassend mindestens:
- eine Vielzahl von Sitzeinheiten (M1 bis Mn), wobei die Sitzeinheiten (M1 bis Mn) mindestens eines sind aus:
- einer nach vorn oder nach hinten gerichteten Sitzeinheit (M1 bis M2), wobei mindestens eine Längsachse des Sitzes (3) parallel zu einer Längsachse der Fahrzeugkabine (100) ist, und
- einer abgewinkelten Sitzeinheit (M3 bis M4), z. B. nach innen oder außen abgewinkelt, wobei mindestens die Längsachse des Sitzes (3) relativ zu der Längsachse der Fahrzeugkabine (100) abgewinkelt ist,
wobei jede der Sitzeinheiten (M1 bis Mn) durch Komponenten (C) erstellt ist aus:
- mindestens einer von einer Vielzahl von Sitzbaugruppen (S1 bis Sn),
- mindestens einer von einer Vielzahl von Sitzschalenstrukturen (F1 bis Fm),
- mindestens einer von einer Vielzahl von Armlehnenstrukturen (A1 bis Ai),
- mindestens einer von einer Vielzahl von Türstrukturen (D1 bis Dk),
- mindestens einer von einer Vielzahl von Sichtschutztrennwänden (P1 bis Pq) und
- mindestens einer von einer Vielzahl von Tischstrukturen (T1 bis Ta),
wobei die nach vorn oder nach hinten gerichtete Sitzeinheit (M1 bis M2) und die abgewinkelte Sitzeinheit (M3 bis M4) unähnlich sind, wobei die nach vorn oder nach hinten gerichtete Sitzeinheit (M1 bis M2) durch eine andere Kombination der Komponenten (C) als die abgewinkelte Sitzeinheit (M3 bis M4) ausgebildet ist,
wobei unterschiedliche Sitzschalenstrukturen (F1 bis Fm) eine Anzahl von gemeinsamen Grundausstattungsteilen für jede Sitzeinheit (M1 bis Mn) umfassen, wobei die gemeinsamen Grundausstattungsteile mindestens eines von identischen Platten (4.2), identischen Wandstrukturen (6), identischen Armlehnen (7), Sichtschutztüren (9), Sichtschutzwänden (10) und/oder Sichtschutzblenden (11), Tischen (12), Möbelanbauteilen (13) und/oder Auflageoberflächenabschnitten (14) sind, und
wobei die unterschiedlichen Sitzschalenstrukturen (F1 bis Fm) derart in Bezug aufeinander zusammengebaut sind, dass mindestens die Sitzeinheitsabmessungen jeder Sitzeinheit (M1 bis Mn) im Wesentlichen gleich bleiben, sodass die nach vorn oder nach hinten gerichtete Sitzeinheit (M1 bis M2) und die angewinkelte Sitzeinheit (M3 bis M4) einen deckungsgleichen Grundriss oder identische Außenabmessungen aufweisen.

2. Bausatz (1) nach Anspruch 1, wobei, für jede Sitzeinheit (M1 bis Mn), eine Breite mindestens einer hinteren Schalenwand in einer Querrichtung der Fahrzeugkabine (100) im Wesentlichen identisch ist.

3. Bausatz (1) nach Anspruch 1 oder 2, wobei, für jede Sitzeinheit (M1 bis Mn), eine Höhe (H) mindestens der hinteren Schalenwand im Wesentlichen identisch ist.

4. Bausatz (1) nach einem der vorstehenden Ansprüche, wobei die Sitzeinheiten (M1 bis Mn) jeder Sitzgestaltung gemeinsame Abmessungen für eine Nutzoberfläche (5) aufweisen.

5. Bausatz (1) nach einem der vorstehenden Ansprüche, wobei jede Sitzeinheit (M1 bis Mn) eine Sitzbaugruppe mit einem zwischen mindestens einer Sitzposition und mindestens einer Bettposition verstellbaren Sitz bereitstellt.

6. Verwendung eines Bausatzes (1) nach einem der vorstehenden Ansprüche , um eine Anzahl von unterschiedlichen Sitzeinheiten (M1 bis Mn) und/oder einer Anzahl von unterschiedlichen Sitzgestaltungen innerhalb einer Fahrzeugkabine (100) zu erstellen.

7. Passagiersitzanordnung (2) für eine Fahrzeugkabine (100), z. B. eine Luftfahrzeugkabine, umfassend:
- einen Bausatz nach Anspruch 1, wobei die Vielzahl von Sitzeinheiten (M1 bis Mn) in einer Längsrichtung (LA) der Fahrzeugkabine (100) hintereinander in einer Reihe (C1 bis Cx) angeordnet sind.

8. Passagiersitzanordnung (2) nach Anspruch 7, wobei eine Sitzgestaltung eine ist von:
- einer Gesamtsitzgestaltung in einer Linie,
- einer nach außen gerichteten Gesamtsitzgestaltung in einem Fischgrätenmuster,
- einer nach innen gerichteten Gesamtsitzgestaltung in dem Fischgrätenmuster und
- einer Kombination unterschiedlicher Sitzgestaltungen zum Anordnen der Sitzeinheiten (M1 bis Mn) in der Fahrzeugkabine (100),
wobei die unähnlichen Sitzeinheiten (M1 bis Mn) in Bezug aufeinander derart anpassbar sind, dass jede der Sitzeinheiten (M1 bis Mn) innerhalb jeder der Sitzgestaltungen positionierbar ist.

9. Fahrzeugkabine (100), umfassend eine Passagiersitzanordnung (2) nach Anspruch 7 oder 8.

## Revendications

1. Ensemble de montage (1) pour un arrangement de siège passager (2) prévu à l'intérieur d'une cabine de véhicule (100) comprenant au moins :
- une pluralité d'unités de siège (M1 à Mn), dans lequel les unités de siège (M1 à Mn) sont au moins :
- une unité de siège orientée vers l'avant ou vers l'arrière (M1 à M2), dans lequel au moins un axe longitudinal du siège (3) est parallèle à un axe longitudinal de la cabine de véhicule (100), et
- une unité de siège inclinée (M3 à M4), par exemple inclinée vers l'intérieur ou vers l'extérieur, dans lequel au moins l'axe longitudinal du siège (3) est incliné par rapport à l'axe longitudinal de la cabine de véhicule (100),
dans lequel chacune des unités de siège (M1 à Mn) est créée par des composants (C) de :
- au moins l'un d'une pluralité d'ensembles sièges (S1 à Sn),
- au moins l'une d'une pluralité de structures de coque de siège (F1 à Fm),
- au moins l'une d'une pluralité de structures d'accoudoir (A1 à Ai),
- au moins l'une d'une pluralité de structures de porte (D1 à Dk),
- au moins l'une d'une pluralité de cloisons de séparation (P1 à Pq), et
- au moins l'une d'une pluralité de structures de table (T1 à Ta),
dans lequel l'unité de siège orientée vers l'avant ou vers l'arrière (M1 à M2) et l'unité de siège inclinée (M3 à M4) sont différentes, l'unité de siège orientée vers l'avant ou vers l'arrière (M1 à M2) étant formée par une combinaison des composants (C) différente de celle de l'unité de siège inclinée (M3 à M4),
dans lequel les différentes structures de coque de siège (F1 à Fm) comprennent un certain nombre de pièces d'équipement de base communes pour chaque unité de siège (M1 à Mn), les pièces d'équipement de base communes étant au moins l'un parmi des panneaux (4.2) identiques, des structures murales (6) identiques, des accoudoirs (7) identiques, des portes de séparation (9), des parois de séparation (10) et/ou des cloisonnettes (11), des tables (12), des pièces de meuble complémentaires (13) et/ou des parties de surface de support (14), et
dans lequel les différentes structures de coque de siège (F1 à Fm) sont montées l'une par rapport à l'autre de sorte qu'au moins des dimensions d'unité de siège de chaque unité de siège (M1 à Mn) restent sensiblement les mêmes, de sorte que l'unité de siège orientée vers l'avant ou vers l'arrière (M1 à M2) et l'unité de siège inclinée (M3 à M4) ont un plan au sol congruent ou des dimensions externes identiques.

2. Ensemble de montage (1) selon la revendication 1, dans lequel, pour chaque unité de siège (M1 à Mn), une largeur d'au moins une paroi de coque arrière dans une direction transversale de la cabine de véhicule (100) est sensiblement identique.

3. Ensemble de montage (1) selon la revendication 1 ou 2, dans lequel, pour chaque unité de siège (M1 à Mn), une hauteur (H) d'au moins la paroi de coque arrière est sensiblement identique.

4. Ensemble de montage (1) selon l'une quelconque des revendications précédentes, dans lequel les unités de siège (M1 à Mn) de chaque disposition de siège fournissent des dimensions de surface d'utilité commune (5).

5. Ensemble de montage (1) selon l'une quelconque des revendications précédentes, dans lequel chaque unité de siège (M1 à Mn) fournit un ensemble siège avec un siège qui est réglable entre au moins une position assise et au moins une position lit.

6. Utilisation d'un ensemble de montage (1) selon l'une quelconque des revendications précédentes pour créer un certain nombre d'unités de sièges (M1 à Mn) différentes et/ou un certain nombre de dispositions de sièges différentes à l'intérieur d'une cabine de véhicule (100).

7. Arrangement de siège passager (2) pour une cabine de véhicule (100), par exemple une cabine d'aéronef, comprenant :
- un ensemble de montage selon la revendication 1, dans lequel la pluralité d'unités de siège (M1 à Mn) sont disposées l'une derrière l'autre dans une colonne (C1 à Cx) dans une direction longitudinale (LA) de la cabine de véhicule (100).

8. Arrangement de siège passager (2) selon la revendication 7, dans lequel une disposition de sièges est l'une parmi :
- une disposition générale de sièges en ligne,
- une disposition générale de sièges en chevrons orientée vers l'extérieur,
- une disposition générale de sièges en chevrons orientés vers l'intérieur et
- une combinaison de différentes dispositions de sièges pour disposer les unités de sièges (M1 à Mn) dans la cabine de véhicule (100),
dans lequel les différentes unités de siège (M1 à Mn) peuvent être adaptées l'une par rapport à l'autre de sorte que chacune des unités de siège (M1 à Mn) peut être positionnée à l'intérieur de chacune des dispositions de sièges.

9. Cabine de véhicule (100) comprenant un arrangement de siège passager (2) selon la revendication 7 ou 8.
